# EUROPEAN PATENT APPLICATION

(11) **EP 4 755 797 A1**
(43) Date of publication of application: **10.06.2026**
(21) Application number: 25220678.4
(22) Date of filing: 04.12.2025
(51) Int. Cl.: B64C 13/14, B64C 13/28, B64C 13/50

(54) **ELECTROMECHANICAL ACTUATION ARRANGEMENT FOR PRIMARY FLIGHT CONTROL SURFACES WITHOUT MASS BALANCE**

(30) Priority: 09.12.2024 US 202463729669 P; 26.11.2025 US 202519402515
(71) Applicant: Embraer S.A., São José dos Campos, 12227-901-SP (BR)
(72) Inventor: BORGES, Lauro Rocha, 12.227-901 São José dos Campos - SP (BR); TAVARES, Felipe Alves, 12.227-901 São José dos Campos - SP (BR); MORANDIN, Marcelo Luiz, 12.227-901 São José dos Campos - SP (BR)
(74) Representative: Liesegang, Eva

(57) **Abstract**

An electromechanical actuation arrangement for a non-mass-balanced primary flight control surface establishes and retains a torsional preload between distributed actuator outputs to eliminate surface freeplay and increase mechanical impedance. Preload is retained mechanically via an interconnect shaft and/or electronically by closed-loop synchronization that maintains a commanded differential torque. An independent flutter-suppression device provides damping and/or locking upon oscillation detection or disconnection. The architecture supports multiple embodiments, including fewer motors than transmissions and a transmission without its own motor, and enables reduction or elimination of hydraulic systems for primary flight controls while meeting aeroelastic requirements under normal and single-fault conditions.

## Description

### CROSS-REFERENCE TO RELATED APPLICATIONS

Benefit is claimed from U.S. Provisional Application No. 63/729,669 filed December 9, 2024, which is incorporated herein by reference in its entirety and for all purposes.

### FIELD

The technology relates to aircraft control systems, and more particularly to electromechanical actuation arrangements for primary flight control surfaces that are not mass-balanced. The technology further relates to introducing a preload and eliminating actuator backlash, mainly by creating a trapped torque condition. The technology also relates to a system monitoring level which detects oscillation and engages proper level of either damping or surface locking.

### BACKGROUND & SUMMARY

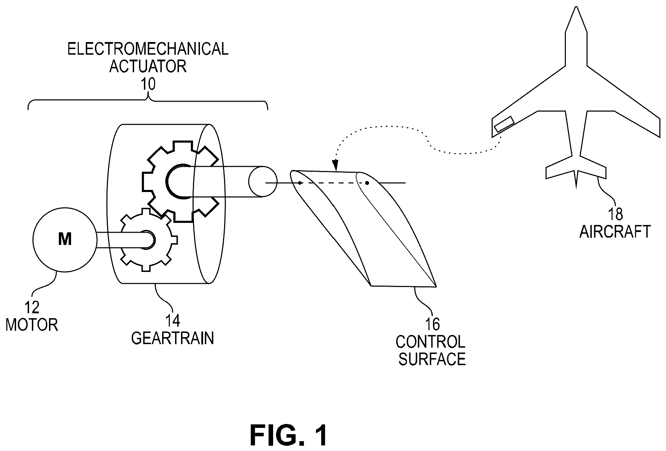

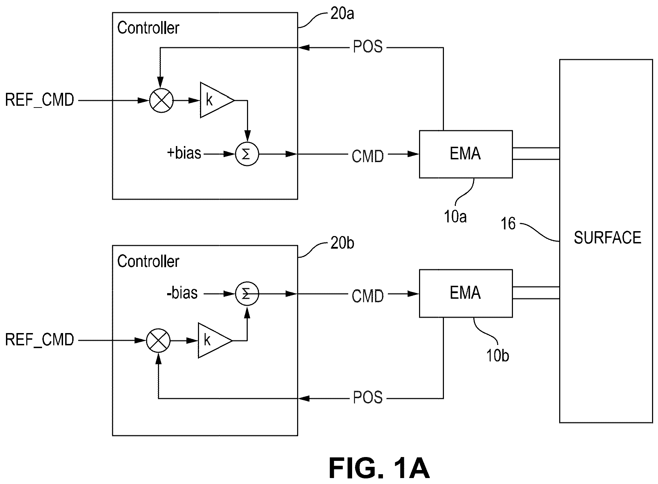

Primary flight control surfaces (ailerons, elevators, rudders) on transport-category aircraft require stringent performance, availability and integrity. Conventional solutions typically employ electrohydraulic actuators powered by centralized hydraulic systems, which add weight and complexity due to pumps, accumulators and extensive plumbing. To prevent the loss of aircraft controllability, the hydraulic system requires proper segregation and redundancy even in case of total engine failure. Electromechanical actuators (EMAs) such as shown in Figure 1 offer an electrical alternative but, in medium and large aircraft, application to primary control surfaces has been constrained by aeroelastic stability concerns-particularly freeplay and insufficient mechanical impedance on control surfaces that are not mass-balanced.

For clarity, "freeplay" means angular deadband at the control surface attributable to cumulative mechanical clearances in the actuator itself, transmissions, linkages and interfaces (see MIL-A-8870C); and "mechanical impedance" refers to the effective stiffness and damping presented by the actuator arrangement to the control surface across a frequency range. Depending on the frequency of the imposed aeroelastic disturbance on the control surface and the actuation arrangement, either the real component of the mechanical impedance (stiffness) or the imaginary component (damping) may dominate as flutter suppression.

Non-mass-balanced control surfaces are desirable to avoid weight and drag penalties associated with balance masses, yet they are more sensitive to flutter and limit-cycle oscillations (LCO) if freeplay grows over service life or if failure conditions reduce effective stiffness or damping. Meeting aeroelastic requirements under both normal and degraded conditions therefore relies on controlling surface freeplay and mechanical impedance.

Example embodiments provide an electromechanical actuation arrangement for a non-mass-balanced primary control surface that establishes and retains a torsional preload between two or more distributed actuator outputs so as to eliminate surface freeplay and increase mechanical impedance. The preload may be retained (i) mechanically via an interconnect shaft acting with the transmissions as a torsional spring, and/or (ii) electronically by closed-loop synchronization that maintains a commanded differential torque between actuators. A flutter-suppression device provides an independent load path configured to damp or lock the surface upon oscillation detection or mechanical disconnect. The architecture enables reduction or elimination of hydraulic systems for primary flight controls while addressing aeroelastic stability under normal and single-fault conditions.

One example aspect provides an electromechanical actuation system for an aircraft non-mass-balanced primary control surface, comprising: a first electromechanical actuator assembly comprising a first electric motor and a first mechanical transmission coupled to the non-mass-balanced primary control surface via a respective first mechanical link; a second electromechanical actuator assembly comprising a second electric motor and a second mechanical transmission coupled to the non-mass-balanced primary control surface via a respective second mechanical link; and a preload-retention mechanism configured to maintain a torsional preload between a first output of the first electromechanical actuator assembly and a second output of the second electromechanical actuator assembly sufficient to eliminate mechanical freeplay at the non-mass-balanced primary control surface while tracking commanded deflection, the preload-retention mechanism comprising at least one of: a mechanical interconnect shaft acting with the first mechanical transmission and the second mechanical transmission as a torsional spring, and/or an electronic synchronization controller configured to maintain a commanded differential torque between the output of the first electromechanical actuator assembly and the output of the second electromechanical actuator assembly.

A flutter-suppression device coupled to the non-mass-balanced primary control surface provides an independent load path configured to damp oscillations and/or lock the non-mass-balanced primary control surface upon oscillation detection or upon loss of preload retention.

The first electric motor and the second electric motor are configured to be powered by separate electrical power supplies.

The first electromechanical actuator assembly and the second electromechanical actuator assembly are spatially distributed along the non-mass-balanced aircraft primary control surface.

A third electromechanical actuator assembly may be coupled to the non-mass-balanced primary control surface and mechanically synchronized via an interconnect shaft with the first electromechanical actuator assembly and the second electromechanical actuator assembly.

The third electromechanical actuator assembly comprises a mechanical transmission without its own electric motor, the mechanical transmission being driven by the interconnect shaft.

The first mechanical transmission and the second mechanical transmission each comprises a monitored including sensing of one or more of: input or output angle, rate, torque, temperature, and/or backlash growth.

The first electromechanical actuator assembly has a first actuator torque T1, the second electromechanical actuator assembly has a second actuator torque T2, and the electronic synchronization controller commands the first actuator torque T1 and the second actuator torque T2 such that a net torque tracks a deflection command while maintaining a non-zero differential torque that preserves the torsional preload.

The flutter-suppression device is selected from: a viscous damper, an eddy-current damper, a friction damper, a magnetorheological damper with adjustable characteristics, and a lockable brake.

The flutter-suppression device is configured to engage based on oscillation metrics derived from surface motion sensing and/or to engage passively upon mechanical disconnect of the first electromechanical actuator assembly and/or the second electromechanical actuator assembly.

The interconnect shaft couples outputs of the first electric motor and the second electric motor and/or the first mechanical transmission and the second mechanical transmission such that a failure of the first electric motor permits the second electric motor to back-drive the failed first electric motor while maintaining surface stiffness.

The first mechanical transmission and the second mechanical transmission comprise conventional gearboxes without anti-backlash features, and surface-level freeplay elimination is achieved by the torsional preload.

Torsional preload is introduced by rotating the first electromechanical actuator assembly relative to the second electromechanical actuator assembly prior to establishing coupling of the interconnect shaft, the interconnect shaft and gear ratios maintaining the torsional preload thereafter.

The torsional preload is established and maintained without a shaft by closed-loop electronic synchronization using feedback of position and torque/current.

The electromechanical actuation system is configured to maintain specified maximum freeplay and minimum mechanical impedance across a frequency range under at least one single-fault condition.

Another example aspect provides a control surface actuator arrangement comprising: a first electric motor driving a first transmission and link to a first point of a control surface; a second electric motor driving a second transmission and link to a second point of the control surface; and a mechanical linkage, not part of the control surface, configured to retain a torsional preload between the first transmission and the second transmission after initial relative rotation.

The mechanical linkage comprises a rotating shaft providing torsional compliance.

A flutter device is connected at a third point of the control surface and configured to provide damping and/or locking when preload retention is lost.

A further example aspect provides a method of actuating a non-mass-balanced aircraft control surface, comprising: establishing a torsional preload between outputs of first and second actuators sufficient to eliminate freeplay; and retaining the torsional preload by at least one of: (i) coupling the first and second actuators via an interconnect shaft acting as a torsional spring, and/or (ii) electronically maintaining a commanded differential torque; tracking a deflection command while maintaining the torsional preload; and engaging a damping or locking mode upon detection of preload loss.

The method further comprises detecting oscillations or mechanical disconnect using motion and/or torque/position sensors of a monitored mechanical transmission.

### BRIEF DESCRIPTION OF THE DRAWINGS

Figure 1 - an example electromechanical actuator 10 comprising a motor 12 driving a gear train 14 to actuate a control surface 16 of an aircraft 18 to change position and/or orientation of the control surface.
Figure 1A - example electrical controllers 20 controlling electromechanical actuators 10.
Figure 2 - First non-limiting embodiment: two EMAs driving spaced link points, mechanically coupled by an interconnect shaft that retains torsional preload; optional flutter device coupled at a third point.
Figure 3 - Second non-limiting embodiment: three EMAs distributed along the surface, all mechanically coupled by interconnect shafts to share load and retain preload.
Figure 4 - Third non-limiting embodiment: a central transmission without its own motor driven via the interconnect shaft between outboard EMAs, retaining preload and reducing motor count.
Figure 5 - Fourth non-limiting embodiment: one EMA plus a simpler actuator without a mechanical shaft; electronic synchronization maintains a commanded differential torque (preload) between actuator outputs.
Figure 6 - Fifth non-limiting embodiment: dual-motor arrangement driving a transmission architecture with acceptable end-of-life freeplay; a controllable damper/lock device provides flutter suppression and tunable dynamic characteristics.
Figure 7 - Sixth non-limiting embodiment: fewer motors than transmissions; two motors shaft-synchronize multiple transmissions to multiple link points on the surface.

### DETAILED DESCRIPTION OF NON-LIMITING EMBODIMENTS

The embodiments below describe system-level topologies that enable application of EMAs to non-mass-balanced primary control surfaces by eliminating surface freeplay and providing adequate mechanical impedance across the flight envelope.

### Preload Establishment

A torsional preload ("trapped torque") is introduced between actuator outputs. In mechanically coupled embodiments, the preload is set by phasing the actuators relative to one another prior to locking the interconnect shaft and/or by applying a commanded offset while the shaft provides reaction torque; in electronically synchronized embodiments, the actuator controller commands differential torques/positions such that a non-zero torque bias is maintained while tracking a net deflection command.

### Preload Retention

In shaft-coupled embodiments, the interconnect shaft and transmissions provide torsional stiffness that maintains the preload throughout operation, accounting for gear ratios and compliance. In electronically synchronized embodiments, the controller maintains the torque bias using feedback of motor position and torque/current to prevent loss of preload under varying loads and thermal conditions. See e.g., Figure 1A showing an example first controller 20a controlling a first EMA 10a with a first CMD control signal, and an example second (redundant) controller 20b controlling a second (redundant) EMA 10b with a second CMD control signal. Two independent controllers 20a, 20b respectively controlling independent EMAs 10a, 10b provide high reliability and fault tolerance. Each EMA 10a, EMA 10b is connected to move (change the position and/or orientation) of the aircraft control surface 16. The EMAs 10a, 10b each include a position sensor (e.g., a shaft encoder) that detects position and/or orientation of the aircraft control surface 16 or a shaft connected to it. Each respective position sensor provides a respective POS position signal to a respective controller 20a, 20b. In this example, the controllers 20a, 20b each include a comparator that compares the POS position signal indicating control surface 16 position and/or orientation with an inputted reference command REF_CMD (which may be provided e.g., by a flight control computer, a pilot operated inceptor or other control, etc.), and generates an error signal. The error signal is amplified by an operational amplifier having a gain of k, and summed in a closed loop feedback arrangement with a preset bias/offset value to produce the CMD signal. Another embodiment may comprise at least one processor connected to a nontransitory memory storing program instructions, the at least one processor performing the above operations based on executing the program instructions.

### Monitoring and "Monitored Mechanical Transmission"

A monitored mechanical transmission includes sensing of one or more of: input/output angles, rates, backlash growth, torque, temperature, and wear proxies. Sensors may be placed on motor/output shafts, within gear stages, or at rod-end/link pivots. Monitoring supports preload management, synchronization, and fault detection (e.g., disconnect, jam, or tooth shear).

### Fault Handling and Modes

The controller manages transitions among: (i) Preload-Set; (ii) Normal (preload maintained while tracking deflection); (iii) Degraded (e.g., motor jam/runaway, transmission disconnect, shaft break, power-bus loss) with degraded but sufficient impedance; and (iv) Flutter-Mitigation, wherein the flutter device engages damping and/or locking based on oscillation or disconnect detection. In shafted embodiments, the remaining actuator back-drives the failed unit through the shaft, preserving stiffness; in electronically synchronized embodiments, the controller maintains torque bias with the remaining healthy actuator(s).

### Flutter-Suppression Device Options

The independent device may be a passive damper (e.g., viscous, eddy-current, or friction), a semi-active magnetorheological damper with electrically adjustable characteristics, and/or a lockable brake. Engagement can be automatic upon mechanical disconnect or commanded based on oscillation metrics derived from surface motion sensors.

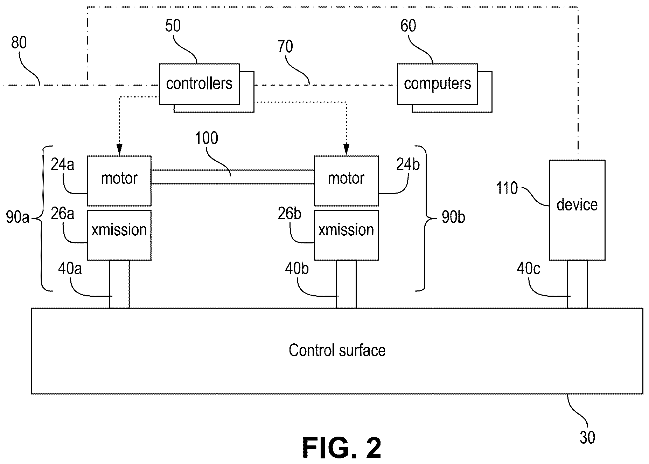

### First Embodiment (Figure 2: Two EMAs with Interconnect Shaft)

Two electromechanical actuator assemblies 90a, 90b, each comprising a motor 24, transmission 26, and link 40 to spatially separated points on the control surface 30, are coupled via an interconnect shaft 100. The shaft 100 maintains a torsional preload, eliminating surface freeplay while enabling load sharing. A flutter device 110 may be attached to the control surface 30 at a third point. As discussed above, separate controller(s) 50 may control the separate motors 24a, 24b.

Conventional use of continuous damping is based on oversizing the actuator. This embodiment provides an actuator gearbox 26 to provide acceptable level of freeplay for end of life. The damping is so modulated based on oscillating detection, providing no passive flutter suppression.

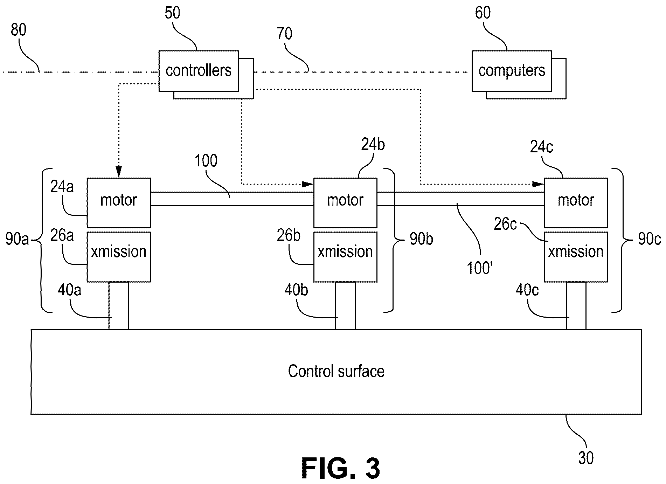

### Second Embodiment (Figure 3: Three EMAs Shaft-Linked)

Three EMAs 90a, 90b, 90c are spatially distributed along the control surface 30 and mechanically synchronized by interconnect shafts 100, 100' to retain preload and provide redundancy and load distribution. With three independent gearboxes 26a, 26b, 26c and three motors 24a, 24b, 24c, the mechanical link 100, 100' controls are synchronized by adjusting the freeplay within the torsional stiffness of the control surface 30. This does not require any control algorithm and additional damper or locker device.

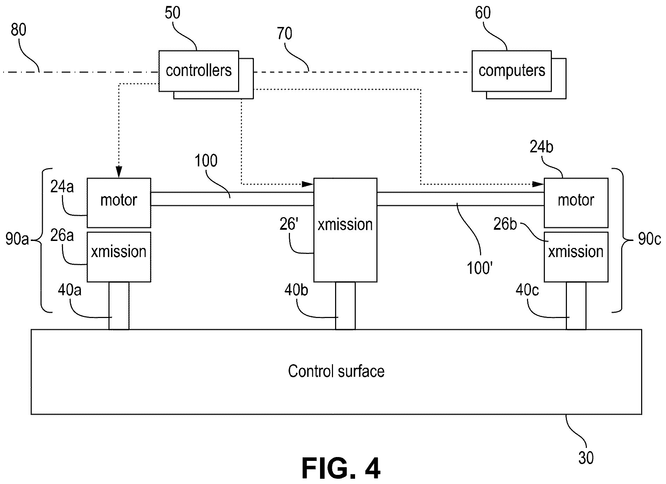

### Third Embodiment (Figure 4: Central Transmission Without Motor)

A central transmission 26' lacking its own motor is driven by the interconnect shaft(s) 100, 100' between outboard EMAs 90a, 90c. The topology reduces motor count while preserving preload and stiffness.

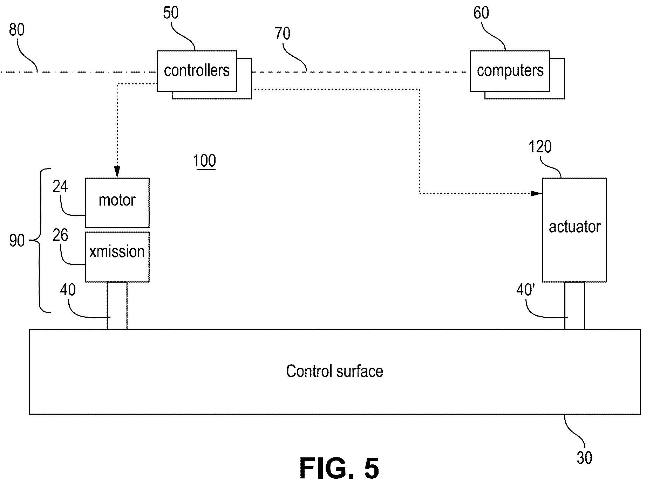

### Fourth Embodiment (Figure 5: Electronic Synchronization)

One EMA 90 and a simpler actuator 120 are not mechanically shaft-linked. The controller 50 maintains a commanded differential torque between outputs for preload and synchrony.

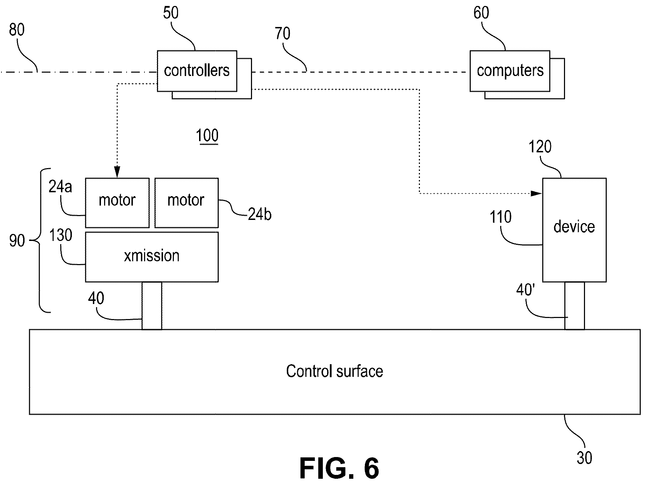

### Fifth Embodiment (Figure 6: Tunable Flutter Device)

Two motors 24a, 24b drive a transmission 130 architecture designed for acceptable end-of-life freeplay. A controllable damper/lock device 110 provides an independent flutter-suppression path with electrical tuning of mechanical characteristics.

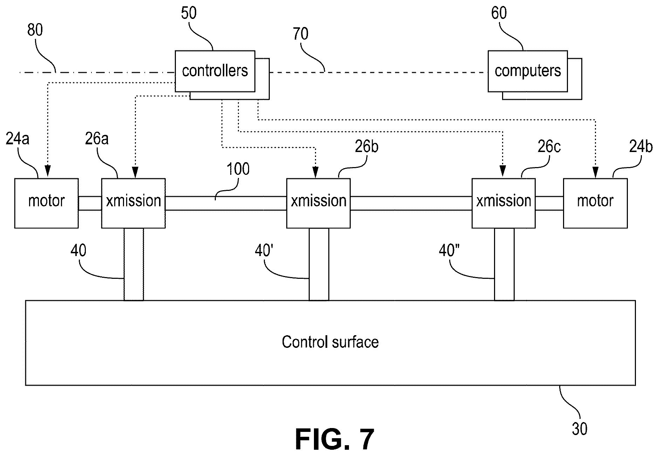

### Sixth Embodiment (Figure 7: Fewer Motors Than Transmissions)

Two motors 24a, 24b shaft-synchronize two or more transmissions26a, 26b, 26c to multiple control surface 30 link points, enabling redundancy and load sharing with reduced motor count.

Across embodiments, the arrangement maintains specified maximum freeplay at the control surface and meets minimum mechanical impedance targets across a frequency range, including under single-fault conditions, thereby enhancing flutter margin and mitigating LCO without mass balancing.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. An electromechanical actuation system for an aircraft non-mass-balanced primary control surface, comprising:
a first electromechanical actuator assembly comprising a first electric motor and a first mechanical transmission coupled to the non-mass-balanced primary control surface via a respective first mechanical link;
a second electromechanical actuator assembly comprising a second electric motor and a second mechanical transmission coupled to the non-mass-balanced primary control surface via a respective second mechanical link; and
a preload-retention mechanism configured to maintain a torsional preload between a first output of the first electromechanical actuator assembly and a second output of the second electromechanical actuator assembly sufficient to eliminate mechanical freeplay at the non-mass-balanced primary control surface while tracking commanded deflection, the preload-retention mechanism comprising at least one of:
(i) a mechanical interconnect shaft acting with the first mechanical transmission and the second mechanical transmission as a torsional spring, and/or
(ii) an electronic synchronization controller configured to maintain a commanded differential torque between the output of the first electromechanical actuator assembly and the output of the second electromechanical actuator assembly.

2. The electromechanical actuation system of claim 1, further comprising a flutter-suppression device coupled to the non-mass-balanced primary control surface and providing an independent load path configured to damp oscillations and/or lock the non-mass-balanced primary control surface upon oscillation detection or upon loss of preload retention.

3. The electromechanical actuation system of claim 1 or 2, wherein the first electric motor and the second electric motor are configured to be powered by separate electrical power supplies; and/or
wherein the first electromechanical actuator assembly and the second electromechanical actuator assembly are spatially distributed along the non-mass-balanced aircraft primary control surface.

4. The electromechanical actuation system of one of the preceding claims, further comprising a third electromechanical actuator assembly coupled to the non-mass-balanced primary control surface and mechanically synchronized via an interconnect shaft with the first electromechanical actuator assembly and the second electromechanical actuator assembly;
wherein the third electromechanical actuator assembly preferably comprises a mechanical transmission without its own electric motor, the mechanical transmission being driven by the interconnect shaft.

5. The electromechanical actuation system of one of the preceding claims, wherein the first mechanical transmission and the second mechanical transmission each comprises a monitored including sensing of one or more of: input or output angle, rate, torque, temperature, and/or backlash growth; and/or
wherein the first electromechanical actuator assembly has a first actuator torque T1, the second electromechanical actuator assembly has a second actuator torque T2, and the electronic synchronization controller commands the first actuator torque T1 and the second actuator torque T2 such that a net torque tracks a deflection command while maintaining a non-zero differential torque that preserves the torsional preload.

6. The electromechanical actuation system of one of the preceding claims and claim 2, wherein the flutter-suppression device is selected from: a viscous damper, an eddy-current damper, a friction damper, a magnetorheological damper with adjustable characteristics, and a lockable brake; and/or
wherein the flutter-suppression device is configured to engage based on oscillation metrics derived from surface motion sensing and/or to engage passively upon mechanical disconnect of the first electromechanical actuator assembly and/or the second electromechanical actuator assembly.

7. The electromechanical actuation system of one of the preceding claims and claim 4, wherein the interconnect shaft couples outputs of the first electric motor and the second electric motor and/or the first mechanical transmission and the second mechanical transmission such that a failure of the first electric motor permits the second electric motor to back-drive the failed first electric motor while maintaining surface stiffness.

8. The electromechanical actuation system of one of the preceding claims, wherein the first mechanical transmission and the second mechanical transmission comprise conventional gearboxes without anti-backlash features, and surface-level freeplay elimination is achieved by the torsional preload.

9. The electromechanical actuation system of one of the preceding claims, wherein torsional preload is introduced by rotating the first electromechanical actuator assembly relative to the second electromechanical actuator assembly prior to establishing coupling of the interconnect shaft, the interconnect shaft and gear ratios maintaining the torsional preload thereafter; and/or wherein the torsional preload is established and maintained without a shaft by closed-loop electronic synchronization using feedback of position and torque/current.

10. An aircraft comprising the electromechanical actuation system of one of the preceding claims, wherein the electromechanical actuation system is configured to maintain specified maximum freeplay and minimum mechanical impedance across a frequency range under at least one single-fault condition.

11. A control surface actuator arrangement comprising:
a first electric motor driving a first transmission and link to a first point of a control surface;
a second electric motor driving a second transmission and link to a second point of the control surface; and
a mechanical linkage, not part of the control surface, configured to retain a torsional preload between the first transmission and the second transmission after initial relative rotation.

12. The control surface actuator arrangement of claim 11, wherein the mechanical linkage comprises a rotating shaft providing torsional compliance.

13. The control surface actuator arrangement of claim 11 or 12, further comprising a flutter device connected at a third point of the control surface and configured to provide damping and/or locking when preload retention is lost.

14. A method of actuating a non-mass-balanced aircraft control surface, comprising:
establishing a torsional preload between outputs of first and second actuators sufficient to eliminate freeplay; and
retaining the torsional preload by at least one of:
(i) coupling the first and second actuators via an interconnect shaft acting as a torsional spring, and/or
(ii) electronically maintaining a commanded differential torque; tracking a deflection command while maintaining the torsional preload; and engaging a damping or locking mode upon detection of preload loss.

15. The method of claim 14, further comprising detecting oscillations or mechanical disconnect using motion and/or torque/position sensors of a monitored mechanical transmission.
